# EUROPÄISCHE PATENTSCHRIFT

(11) **EP 0 697 931 B1**
(45) Veröffentlichungstag und Bekanntmachung des Hinweises auf die Patenterteilung: **09.04.1997**
(21) Anmeldenummer: 94905038.9
(22) Anmeldetag: 12.01.1994
(51) Int. Cl.: B22F 3/02, C04B 35/638

(54) **VERFAHREN ZUR HERSTELLUNG VON SINTERFORMTEILEN**
METHOD OF PRODUCING SINTERED ARTICLES
PROCEDE DE FABRICATION DE PIECES FRITTEES

(30) Priorität: 04.05.1993 DE 4314694
(43) Veröffentlichungstag der Anmeldung: 28.02.1996
(73) Patentinhaber: BASF Aktiengesellschaft, 67063 Ludwigshafen (DE)
(72) Erfinder: TRUEBENBACH, Peter, D-67065 Ludwigshafen (DE)
(86) Internationale Anmeldenummer: EP9400072
(87) Internationale Veröffentlichungsnummer: WO9425205

(56) Entgegenhaltungen:
- DE-A- 3 935 276
- DE-A- 4 007 345
- DE-A- 4 021 739

## Beschreibung

Die vorliegende Erfindung betrifft ein verbessertes Verfahren zur Herstellung von Sinterformteilen durch Verformen eines Gemisches aus einem sinterbaren keramischen oder metallischen Pulver und Polyoxymethylen oder eines Copolymerisates mit überwiegenden Anteilen an Oxymethyleneinheiten als Bindemittel zu einem Grünkörper, Entfernen des Bindemittels durch Behandlung mit einer gasförmigen Säure und Sintern.

In der EP-A-413 231 ist ein Verfahren zur Herstellung von anorganischen Sinterformteilen beschrieben. Gemäß dieser Lehre werden sogenannte Grünkörper aus sinterbaren Pulvern und Polyoxymethylen als Bindemittel durch Spritzguß oder Strangpressen geformt. Das Bindemittel wird aus diesen Grünteilen durch Behandlung mit einer gasförmigen Säure oder gasförmigen Bortrifluorid, vorzugsweise in einem inerten Trägergasstrom, entfernt, und die so erhaltenen Teile werden gesintert.

Aus der älteren Anmeldung DE-A-42354293 ist ein weiter entwickeltes Verfahren zur Herstellung von Sinterformteilen bekannt, bei dem die Entfernung des Bindemittels Polyoxymethylen bei einem gegenüber Normaldruck vermindertem Druck und somit ohne Verwendung eines Trägergases durchgeführt wird.

Beiden Verfahren gemeinsam ist die Art der zu verwendenden Säuren zur Entfernung des Bindemittels. Als solche sind bei Raumtemperatur gasförmige oder flüssige Säuren wie beispielsweise Halogenwasserstoffe und Schwefelwasserstoff oder Salpetersäure, Schwefelsäure, Ameisensäure und Essigsäure genannt. Diese Säuren verbleiben jedoch in der Gasphase und wirken korrodierend auf alle Apparateteile, die mit dieser Gasphase in Berührung kommen, oder sie bilden flüssige Filme, die ebenfalls korrosiv wirken. Außerdem sind diese Säuren nicht ohne weiteres zu entsorgen.

Der vorliegenden Erfindung lag daher die Aufgabe zugrunde, diesen Mängeln abzuhelfen.

Demgemäß wurde ein Verfahren zur Herstellung von Sinterformteilen durch Verformen eines Gemisches aus einem sinterbaren keramischen oder metallischen Pulver und Polyoxymethylen oder eines Copolymerisates mit überwiegenden Anteilen an Oxymethyleneinheiten als Bindemittel zu einem Grünkörper, Entfernen des Bindemittels durch Behandlung mit einer gasförmigen Säure und Sintern gefunden, welches dadurch gekennzeichnet ist, daß man zur Entfernung des Bindemittels eine Säure verwendet, die bei Raumtemperatur fest ist und bei höheren Temperaturen sublimiert oder schmilzt und verdampft.

Als sinterbare Pulver für das erfindungsgemäße Verfahren kommen oxidische, keramische Pulver wie Al₂O₃, Y₂O₃, SiO₂, ZrO₂, TiO₂, Al₂TiO₅ oder YBa₂Cu₃O₇₋ₓ als keramischer Supraleiter in Betracht. Weiterhin eignen sich oxidfreie, keramische Pulver wie Si₃N₄, SiC, BN, B₄C, AlN, TiC, TiN, TaC und WC.

Als Metallpulver seien beispielsweise Pulver von Fe, Al, Cu, Nb, Ti, Mn, V, Ni, Cr, Co, Mo, W und Si genannt. Die Metallpulver können ebenso in Form von Legierungen eingesetzt werden, beispielsweise als intermetallische Phasen wie TiAl, Ti₃Al und Ni₃Al. Außerdem kommen Graphit oder Ruß in Betracht. Selbstverständlich können auch Mischungen der genannten Materialien verwendet werden.

Die Korngröße der Pulver liegt in der Regel bei 0,005 µm bis 100 µm, vorzugsweise 0,1 µm bis 30 µm, besonders bevorzugt 0,2 µm bis 10 µm.

Die erfindungsgemäß einzusetzenden Bindemittel bestehen aus Polyoxymethylen, das vorteilhaft eine Molmasse von 10.000 bis 500.000 aufweist. Neben Homopolymerisaten von Formaldehyd oder Trioxan eignen sich auch Copolymerisate aus Trioxan mit z.B. cyclischen Ethern wie Ethylenoxid und 1,3-Dioxolan oder Formalen wie Butandiolformal, wobei die Mengen der Comonomeren im allgemeinen bei 1 bis 4 Gew.-% der Polymeren liegen.

Üblicherweise enthalten die zu verformenden Massen neben dem Bindemittel 40 bis 70 Vol-% des sinterbaren Pulvers. Weiterhin können den Massen anorganische Fasern oder Whisker aus beispielsweise Al₂O₃, SiC, Si₃N₄ oder C zugesetzt werden. Außerdem können sie Hilfsmittel wie Dispergatoren, Schmiermittel wie Polyethylenglykol oder Stearinsäure oder weitere thermoplastische Bindemittel wie Polyethylen, Polymethylmethacrylat oder Polyethylenoxid enthalten.

Die Menge an Hilfsmittel liegt in der Regel zwischen 0,1 und 12 Gew.-% der Gesamtmasse.

Nach Vermischen aller Komponenten, z.B. in einem Kneter oder Extruder, werden die Massen verformt, z.B. durch Spritzguß in den hierfür üblichen Schnecken- oder Kolbenspritzgußmaschinen bei Temperaturen von 160 bis 200°C und Drücken von 500 bis 2000 bar.

Die so erhaltenen Grünkörper werden mit Säuren behandelt, wobei das Bindemittel Polyoxymethylen zu gasförmigen Produkten wie überwiegend Formaldehyd, abgebaut wird. Die gasförmigen Abbauprodukte werden üblicherweise aus der Reaktionszone abgezogen.

Als erfindungsgemäß zu verwendende Säuren eignen sich solche, die bei Raumtemperatur fest sind und bei höheren Temperaturen sublimieren oder schmelzen und verdampfen, darunter vorzugsweise solche mit einem Sublimations- oder Schmelzpunkt zwischen 25°C und 200°C.

Besonders bevorzugt sind wasserfreie Oxalsäure oder Oxalsäuredihydrat. Weiterhin eignet sich Glyoxalsäure. Außerdem kommen Benzolsulfonsäure, die Naphthalinsulfonsäuren und Maleinsäure oder Gemische dieser Säuren in Betracht. Diese können sowohl für sich allein oder auch zusammen mit einem Trägergas wie Luft, Stickstoff oder einem Edelgas bei der Entbinderung eingesetzt werden.

Die erfindungsgemäß zu verwendenden Säuren gelangen bei der Entbinderungstemperatur zunächst in die Gasphase, wirken von hier aus auf das Bindemittel ein und desublimieren oder erstarren nach Abkühlung an den Wandungen der Entbinderungsvorrichtung. In einem anschließenden Entbinderungsvorgang gelangen sie wieder in die Gasphase, d.h. die Säure verläßt die Vorrichtung praktisch nicht. Hierin liegt eine besonders bevorzugte Ausführungsform des erfindungsgemäßen Verfahrens.

Zur Erleichterung der Dosierung kann es zweckmäßig sein, die obengenannten Säuren als Lösung in polaren Lösungsmitteln, vorzugsweise mit Siedepunkten unter 200°C, einzusetzen. Als solche kommen vor allem Aceton, Dioxan, Ethanol und Acetonitril in Betracht.

Die Temperatur bei der Bindemittelentfernung beträgt im allgemeinen 100 bis 160°C, wobei es bevorzugt ist, unter der Erweichungstemperatur des Bindemittels zu arbeiten.

Man kann die Entbinderung bei Normaldruck oder vermindertem Druck vornehmen. Die bevorzugte Durchführung bei Normaldruck wird insbesondere in einem Trägergas wie vor allem Stickstoff vorgenommen. Bei vermindertem Druck kann man zweckmäßigerweise auf das Trägergas verzichten.

Das erfindungsgemäße Verfahren hat den Vorteil, daß die zu verwendenden Säuren aufgrund ihrer bei Raumtemperatur festen Form problemlos transportiert und dosiert werden können und keinerlei besonderer Sicherheitsvorkehrungen bedürfen.

Ein weiterer Vorteil ist, daß Grünkörper aus oxidationsempfindlichen Sintermaterialien wie WC/Co und Cu problemlos entbindert werden können.

### Beispiele

### Beispiel 1

Die in der Tabelle aufgeführten Pulver Nr. 1 bis 8 der durchschnittlichen Korngrößen KG wurden in den angegebenen Mengen mit einem Polyoxymethylencopolymer aus Trioxan und 2 Gew.-% Butandiolformal mit einem durchschnittlichen Molekulargewicht von 150.000 sowie mit 2 Gew.-% Polyethylen (Nr. 1 bis 3) oder mit 2 Gew.-% Polyethylenglykol (Nr. 4 bis 8) mit einem Molekulargewicht von 800 als Schmiermittel verknetet und durch Spritzguß zu Stäben der Abmessungen 5 x 7 x 65 mm³ verarbeitet.

Erfindungsgemäß wurden diese Stäbe bei 135°C unter Normaldruck mit 150 g wasserfreier Oxalsäure und 500 l/h Stickstoff als Trägergas für die Dauer von 6 Stunden in einem 50 l-Ofen zum Binderabbau behandelt. Der Gewichtsverlust an wasserfreier Oxalsäure betrug 85 g.

Die so hergestellten Stäbe zeigten keine Oxidation der Oberflächen, waren frei von Rissen und wiesen nach dem Sintern bei den Sintertemperaturen Tₛ die in der Tabelle angegebenen Sinterdichten Dₛ auf.

### Beispiel 2

Die nach Beispiel 1 hergestellten Al₂O₃-Stäbe (Nr. 4) wurden erfindungsgemäß bei 130°C und 50 mbar mit 40 g Oxalsäuredihydrat für die Dauer von 6 Stunden in einem 3 l-Ofen zum Binderabbau behandelt. Nach der Entbinderung waren 27 g Oxalsäuredihydrat wegsublimiert.

Der Gewichtsverlust der so hergestellten Stäbe betrug 19,2 %. Nach dem Sintern bei 1600°C an der Luft wiesen sie eine Sinterdichte von 3,89 g/cm³ auf.

### Beispiel 3

Die nach Beispiel 1 hergestellten Al₂O₃-Stäbe (Nr. 4) wurden erfindungsgemäß bei 135°C und 100 mbar mit 20 g Benzolsulfonsäure und 200 l/h Stickstoff als Trägergas für die Dauer von 8 Stunden zum Binderabbau behandelt. Nach der Entbinderung war die Benzolsulfonsäure vollständig verdampft.

Der Gewichtsverlust der so hergestellten Stäbe betrug 19,3 %. Nach dem Sintern bei 1600°C an der Luft betrug die Sinterdichte 3,90 g/cm³.

**Tabelle**

| Nr. | Pulver | | KG [µm] | POM [g] | BDF [g] | PE [g] | PEG [g] | GVₜₕ [%] | GV_{E} [%] | Tₛ [°C] | Dₛ [g/cm³] | Dₜₕ [g/cm³] |
|---|---|---|---|---|---|---|---|---|---|---|---|---|
| 1 | 2000 g | Fe | 3,5 | 198 | 4 | 44 | - | 9,0 | 9,0 | 1280 | 7,64 | 7,86 |
| 2 | 1960 g | Fe | 3,5 | 198 | 4 | 44 | - | 9,0 | 8,9 | 1280 | 7,65 | 7,90 |
| | 40 g | Ni | 7,0 | | | | | | | | | |
| 3 | 4500 g | WC | 0,8 | 311 | 6 | 106 | - | 5,9 | 5,9 | 1500 | 14,0 | 14,5 |
| | 500 g | Co | 2,5 | | | | | | | | | |
| 4 | 1000 g | Al₂O₃ | 0,7 | 239 | 5 | - | 25 | 19,3 | 19,2 | 1600 | 3,90 | 3,97 |
| 5 | 1000 g | ZrO₂ | 0,4 | 195 | 4 | - | 24 | 16,3 | 16,3 | 1500 | 6,05 | 6,08 |
| 6 | 976 g | SiC | 0,4 | 394 | 8 | - | 28 | 28,1 | 20,0 | 2150 | 3,10 | 3,22 |
| | 4 g | B | 0,8 | | | | | | | | | |
| | 20 g | C | 0,025 | | | | | | | | | |
| 7 | 930 g | Si₃N₄ | 0,7 | 325 | 7 | - | 27 | 24,4 | 24,5 | 1850 | 3,19 | 3,25 |
| | 50 g | Y₂O₃ | 0,4 | | | | | | | | | |
| | 20 g | Al₂O₃ | 0,7 | | | | | | | | | |
| 8 | 840 g | Si | 2,0 | 426 | 9 | - | 29 | 29,7 | 29,7 | 1750 | 3,23 | 3,33 |
| | 80 g | Y₂O₃ | 0,4 | | | | | | | | | |
| | 80 g | Al₂O₃ | 0,7 | | | | | | | | | |
| KG : Korngröße POM : Polyoxymethylen BDF : Butandiolformal PE : Polyethylen PEG : Polyethylenglykol GVₜₕ : theor. Gewichtsverlust beim Entbindern GV_{E} : Gewichtsverlust bei der Entbinderung Tₛ : Sintertemperatur Dₛ Sinterdichte Dₜₕ : theor. Sinterdichte | | | | | | | | | | | | |

## Patentansprüche

1. Verfahren zur Herstellung von Sinterformteilen durch Verformen eines Gemisches aus einem sinterbaren keramischen oder metallischen Pulver und Polyoxymethylen oder eines Copolymerisates mit überwiegenden Anteilen an Oxymethyleneinheiten als Bindemittel zu einem Grünkörper, Entfernen des Bindemittels durch Behandlung mit einer gasförmigen Säure und Sintern, dadurch gekennzeichnet, daß man zur Entfernung des Bindemittels eine Säure verwendet, die bei Raumtemperatur fest ist und bei höheren Temperaturen sublimiert oder schmilzt und verdampft.

2. Verfahren nach Anspruch 1, dadurch gekennzeichnet, daß man zur Entfernung des Bindemittels Säuren mit einem Sublimations- oder Schmelzpunkt zwischen 25°C und 200°C verwendet.

3. Verfahren nach Anspruch 1 oder 2, dadurch gekennzeichnet, daß man zur Entfernung des Bindemittels wasserfreie Oxalsäure oder Oxalsäuredihydrat verwendet.

4. Verfahren nach den Ansprüchen 1 bis 3, dadurch gekennzeichnet, daß man die Entfernung des Bindemittels bei Normaldruck oder vermindertem Druck durchführt.

## Claims

1. A process for the production of sintered moldings by molding a mixture of a sinterable ceramic or metallic powder and polyoxymethylene or a copolymer containing a majority of oxymethylene units as binder to give a compact, removing the binder by treatment with a gaseous acid, and sintering the product, which comprises removing the binder using an acid which is solid at room temperature and sublimes or melts and evaporates at elevated temperatures.

2. A process as claimed in claim 1, wherein the binder is removed using acids having a sublimation or melting point of between 25 and 200°C.

3. A process as claimed in claim 1 or 2, wherein the binder is removed using anhydrous oxalic acid or oxalic acid dihydrate.

4. A process as claimed in any of claims 1 to 3, wherein the binder is removed at atmospheric pressure or under reduced pressure.

## Revendications

1. Procédé de préparation d'articles moulés frittés par le formage d'un mélange d'une poudre métallique ou céramique frittable et de polyoxyméthylène ou d'un copolymère avec des proportions prépondérantes d'unités oxyméthylène servant de liant en un corps moulé à l'état vert, l'élimination du liant par traitement par un acide gazeux et frittage, caractérisé en ce que pour l'élimination du liant, on utilise un acide qui est solide à la température ambiante et qui se sublime ou fond et s'évapore à des températures élevées.

2. Procédé suivant la revendication 1, caractérisé en ce qu'en vue de l'élimination du liant, on utilise des acides avec un point de sublimation ou de fusion compris entre 25 et 200°C.

3. Procédé suivant la revendication 1 ou 2, caractérisé en ce que pour l'élimination du liant, on utilise de l'acide oxalique dépourvu d'eau ou de l'acide oxalique dihydraté.

4. Procédé suivant les revendications 1 à 3, caractérisé en ce que l'on entreprend l'élimination du liant à la pression normale ou sous pression réduite.
